# EUROPÄISCHE PATENTSCHRIFT

(11) **EP 3 629 433 B1**
(45) Veröffentlichungstag und Bekanntmachung des Hinweises auf die Patenterteilung: **26.08.2026**
(21) Anmeldenummer: 18196813.2
(22) Anmeldetag: 26.09.2018
(51) Int. Cl.: H02G 3/04, H02G 3/06

(54) **VERFAHREN ZUM HERSTELLEN EINES BRANDSCHUTZKANALS UND BRANDSCHUTZKANAL**
FIRE SAFETY CHANNEL AND METHOD FOR PRODUCING A FIRE SAFETY CHANNEL
PROCÉDÉ DE FABRICATION D'UN CANAL DE PROTECTION CONTRE L'INCENDIE ET CANAL DE PROTECTION CONTRE L'INCENDIE

(43) Veröffentlichungstag der Anmeldung: 01.04.2020
(73) Patentinhaber: G + H Isolierung GmbH, 67063 Ludwigshafen (DE)
(72) Erfinder: Adam, Wolfram, 67063 Ludwigshafen (DE); Friedel, Gerd, 67063 Ludwigshafen (DE); Burow-Strathoff, Heidi, 67063 Ludwigshafen (DE); Wech, Michael, 67063 Ludwigshafen (DE)
(74) Vertreter: Grünecker Patent- und Rechtsanwälte PartG mbB

(56) Entgegenhaltungen:
- EP-A2- 2 849 297
- CA-C- 2 013 227
- DE-C2- 19 653 963
- DE-U1- 20 023 142
- DE-U1- 9 104 959
- FR-A1- 2 877 372
- FR-B1- 2 877 372
- US-A- 4 276 332
- US-A1- 2014 318 054

## Beschreibung

Die Erfindung betrifft ein Verfahren gemäß Oberbegriff des Patentanspruchs 1 sowie einen Brandschutzkanal gemäß Oberbegriff des Patentanspruchs 11.

Brandschutzkanäle sind in vielfältigen Ausbildungen bekannt. Man unterscheidet zwischen E-Kanälen und I-Kanälen. E-Kanäle dienen dem Funktionsschutz elektrischer Leitungen im Brandschutzkanal gegen Brand von außen, um die Funktion der elektrischen Leitungen über einen Zeitraum von 30, 60 oder 90 Minuten, sogar bis 120 Minuten, sicherzustellen. I-Kanäle dienen hingegen dem Schutz von Flucht- und Rettungswegen, Fluren, Treppenräumen und dergleichen vor Brandausbreitung, Rauch, schädlichen Gasen und dergleichen, die von elektrischen Leitungen im Brandfall aus dem I-Brandschutzkanal ausgehen. Die Erfindung betrifft einen Brandschutzkanal des E-Kanal-Typs zum Funktionserhalt elektrischer Leitungen im Brandfall.

Der Einsatzbereich von E-Kanälen umfasst z.B. Raffinerien, Chemieanlagen, Kraftwerke, Produktionsanlagen, Rechenzentren, Kliniken, allgemein öffentliche Gebäude mit Feuchteproblemen (z.B. Bunker), Bauwerke der Telekom, der Deutschen Bundesbahn, Tunnel und Ähnliches. E-Kanäle werden vorwiegend im Inneneinsatz verwendet, obwohl es E-Kanäle auch für den Außeneinsatz gibt.

Eine Vielzahl der E-Kanäle ist vierseitig, d. h., vier zueinander im Wesentlichen senkrechte Wände umgeben einen Kabel-Innenraum. Dazu gibt es Sonderanfertigungen in zwei- oder dreiseitiger Ausführung, deren jeweilige offene Seite bei der Montage an einer Bauwerksfläche von dieser abgedeckt wird, so z. B. bei einer dreiseitigen Auslegung durch eine Decken- oder Seitenwandfläche, oder bei einer zweiseitigen Auslegung durch im rechten Winkel aneinanderstoßende Bauwerksflächen. Üblich sind ferner eine Direktmontage des E-Kanals, eine Montage auf Auslegern oder Unterstützungen oder eine abhängte Montage mit Tragstrukturen an der Bauwerksfläche. E-Kanäle werden zum Selbstbau angeboten, aber auch als Fertig-E-Kanäle aus einzelnen Abschnitten, die z. B. eine Abschnittslänge von etwa 1,25 m haben. Es werden Brandschutzplatten mit Stärken zwischen etwa 15 bis 80 mm verbaut, woraus ein Gewicht zwischen etwa 11 und 60 kg/Laufmeter resultieren kann.

Unter den bekannten E-Kanälen gibt es Ausführungen, bei denen die Brandschutzplatten einlagig oder zweilagig verbaut sind, und auch Ausführungen mit einem Blechmantel. Der Zusammenbau des E-Kanals ist schwierig, mühsam und zeitaufwendig, da die Brandschutzplatten miteinander durch Kleben, Verschrauben oder Klammern verbunden werden, und im Falle eines Blechmantels auch mit dem Blechmantel. Durch die Verbindung der Brandschutzplatten untereinander entstehen sehr schwere Teile, die speziell sobald verbunden schwierig zu handhaben sind.

Aus EP 2 849 297 A2 ist ein Brandschutzkanal bekannt, der rechteckigen Querschnitt, eine Außenhülle mit Blechkanaldeckel, jeweils aus Zinkblech, und innen zweilagig verbaute Brandschutzplatten hat. Die eingebauten Brandschutzplatten werden miteinander und/oder mit der jeweiligen inneren Blechwand verklebt oder verschraubt.

Aus FR 2 877 372 A ist eine Wanddurchführungsstruktur bekannt, die zum Brandschutz im Falle eines Brandes selbsttätig den Durchgang verschließt. In einem Blechkanal sind Schaumstoffkörper und sich gegeneinander unterstützende Brandschutzplatten aus im Brandfall aufschäumenden oder aufquellenden Materialien verbaut und mit der Blechwand verklebt.

Der Erfindung liegt die Aufgabe zugrunde, ein sehr einfaches Verfahren zum Herstellen eines Brandschutzkanals sowie einen Brandschutzkanal mit hoher Brandschutzwirkung zum Funktionserhalt elektrischer Leitungen anzugeben.

Die gestellte Aufgabe wird verfahrensgemäß mit den Merkmalen des Patentanspruchs 1 und bezüglich des Brandschutzkanals mit den Merkmalen des Patentanspruchs 11 gelöst.

Da die Brandschutzplatten ohne gegenseitige Verbindung einzeln im Blechkanal verbaut werden, und die notwendige Wandstärke über zwei Lagen erzielt wird, ist die Handhabung der einzelnen Brandschutzplatten aufgrund ihres geringen Gewichts sehr einfach und mit wenig Arbeitsaufwand verbunden. Der Blechkanal stützt und schützt von außen. Längsstöße der zweiten Lage werden gegenüber Längsstößen der ersten Lage versetzt. Zwischen der ersten Lage und dem Blechkanal wird im Bereich eines Längsstoßes in der ersten Lage ein Streifen eines Brandschutzgewebes eingelegt.

Der Brandschutzkanal zeichnet sich durch eine extrem einfache Zusammenbau-Abfolge aus, da sich die einzelnen Brandschutzplatten ohne gegenseitige Verbindungen bequem handhaben lassen und keine mehrere verbundene Brandschutzplatten aufweisenden Teile vorgefertigt und manipuliert zu werden brauchen. Der Blechkanal schützt den Brandschutzkanal von außen, sodass er dauerhaft im Außeneinsatz benutzt werden kann, jedoch auch im Innenbereich. Der Blechmantel lässt sich dekorativ und/oder hochwertig gestalten, um den technischen Charakter des Brandschutzkanals am oder im Bauwerk weitgehend zu kaschieren. In den Brandschutzkanal ist jeder gegenüber den Längsstößen der zweiten Lage versetzte Längsstoßbereich der ersten Lage zwischen dem Blechkanal und dem Blechkanal-Deckel und der ersten Lage durch einen feuerfesten oder intumeszierenden Streifen eines Brandschutzgewebes bedeckt.

Bei einer zweckmäßigen Verfahrensvariante werden als Brandschutzplatten auf die jeweilige Größe des Brandschutzkanals vorkonfektionierte Brandschutzplatten-Streifen mit geraden und ebenen, zur Plattenebene senkrechten Rändern verwendet. Die Streifen werden präzise vorkonfektioniert, sodass der Zusammenbau zügig durchgeführt werden kann, wobei das geringe Gewicht jedes einzelnen Streifens eine bequeme Handhabung gewährleistet.

Zur besseren Positionierung von zwei Lagen Brandschutzplatten im Blechkanal und zum Verbessern der Brandschutzwirkung können in jedem Eckbereich die stumpf aneinanderstoßenden Ränder und Randbereiche so platziert werden, dass in jedem Eckbereich ein versetzter Stufenfalz entsteht.

Bei vierseitiger Auslegung werden alle an den vier Wänden verbauten Brandschutzplatten durch den Blechkanaldeckel fixiert, der auf dem Blechkanal festgelegt wird.

In der vierseitigen Auslegung des Brandschutzkanals kann der Streifen als geschlossener Gürtel vorgesehen sein. Das Brandschutzgewebe kann wasserfest sein und eine Breite von etwa 40 mm haben.

Für eine ausreichende Brandschutzwirkung reichen Brandschutzplatten-Streifen mit Stärken von 15 bis 30 mm oder sogar 40 mm aus, obwohl auch stärkere Streifen, z. B. bis etwa 80 mm, eingesetzt werden können. Die Brandschutzplatten-Streifen können in den ersten und zweiten Lagen gleiche oder unterschiedliche Stärken und zum Teil unterschiedliche Längen haben.

Ferner ist es zweckmäßig, wenn der Blechkanal ein winkeliges oder U-förmiges Blechkantteil ist, oder, wie auch der Blechkanal-Deckel, aus z. B. mit Verbindungsflanschen gefertigten einzelnen Blechplatten gefügt, vorzugsweise verschraubt, vernietet oder verklipst wird.

Für den Blechkanal und den Blechkanal-Deckel, falls vorgesehen, kann einfaches Blech verwendet werden oder verzinktes Blech oder sogar Edelstahlblech.

Die elektrischen Leitungen können direkt auf der zweiten Lage verlegt werden, oder auf wenigstens einer Kabelpritsche, die auf der zweiten Lage liegt oder dort fixiert ist.

In einem Brandschutzkanal mit mehr als einem Brandschutzkanal-Abschnitt werden die Brandschutzkanal-Abschnitte über Verbindungsflansche an den Enden des Blechkanals und des Blechkanal-Deckels oder durch Überlappen gerader Enden des Blechkanals und -Deckels miteinander verbunden, vorzugsweise verschraubt, vernietet oder verklipst.

Ohne darauf eingeschränkt zu sein, kann das Material der Brandschutzplatten-Streifen auf Zementbasis hergestellt und/oder sogenanntes Aestuver-Material sein. Brandschutzplatten-Streifen allgemein zeichnen sich durch hohe Maßgenauigkeit, Formstabilität und verschmutzungsfreie Verarbeitbarkeit bei der Montage aus.

Im Hinblick auf hohe Brandschutzwirkung ist es zweckmäßig, wenn die Längsränder und Randbereiche der in zwei Lagen lose eingelegten Brandschutzplatten-Streifen in jedem Winkelbereich der Wände des Brandschutzkanals einen versetzten Stufenfalz bilden.

Mehrere Brandschutzkanal-Abschnitte werden über verschraubte, vernietete oder verklipste Verbindungsflansche des Blechkanals und des Blechkanal-Deckels verbunden oder mit geraden Enden überlappend ineinander gesteckt.

Anhand der Zeichnung werden Ausführungsformen des Erfindungsgegenstandes erläutert. Es zeigen:
- Fig. 1: eine Perspektivansicht zweier Bestandteile eines vierseitigen Brandschutzkanals, vor dem Zusammenbau,
- Fig. 2: eine Perspektivansicht eines zusammengebauten Brandschutzkanal-Abschnitts,
- Fig. 3: eine vergrößerte perspektivische Darstellung eines Endes des Brandschutzkanal-Abschnitts von Fig. 2,
- Fig. 4: eine Frontansicht des vierseitigen Brandschutzkanal-Abschnitts von Fig. 2 und Fig. 3,
- Fig. 5: eine Seitenansicht eines Teils des Brandschutzkanal-Abschnitts der Fig. 2 bis 4,
- Fig. 6: einen Teilschnitt zweier Kanalabschnitte mit einer anderen Verbindungsart,
- Fig. 7: eine Frontansicht eines an einer Bauwerksfläche montierten, nicht unter die Erfindung fallenden Brandschutzkanals in dreiseitiger Auslegung, und
- Fig. 8: eine Frontansicht eines an Bauwerksflächen montierten, nicht unter die Erfindung fallenden Brandschutzkanals in zweiseitiger Auslegung.

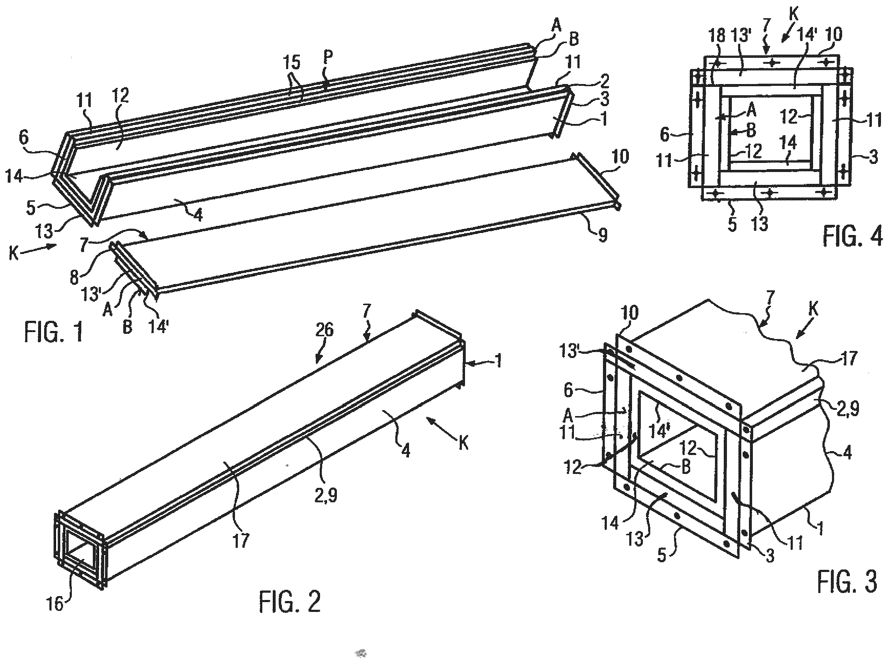

Fig. 1 verdeutlich zwei Hauptbestandteile zur Herstellung eines Brandschutzkanals K zum Funktionsschutz elektrischer Leitungen. Es handelt sich hierbei um eine vierseitige Auslegung vor dem endgültigen Zusammenbau.

Ein im Querschnitt U-förmiger Blechkanal 1 dient als Außenabdeckung und weist im Wesentlichen ebene Wände 4 auf, entweder eines U-förmigen vorgefertigten Blechkantteils oder zusammengesetzt aus einzelnen Blechplatten. An den Enden und Längsrändern des Blechkanals 1 sind z. B. Verbindungsflansche 2, 3, 5, 6 angeformt. An den drei Wänden des Blechkanals 1 sind hier innen z. B. erste Lagen A und daran zweite Lagen B aus Brandschutzplatten P lose und ohne gegenseitige Verbindung oder Verbindung mit dem Blechkanal 1 eingelegt, zweckmäßig auf die Größe des Brandschutzkanals K vorkonfektionierte Brandschutzplatten-Streifen 11, 12, 14, 13 mit geraden, ebenen und zur Plattenebene im Wesentlichen senkrechten Längsrändern 15. Zum Abschluss des Brandschutzkanals K in dieser vierseitigen Auslegung ist ein Blechkanal-Blechdeckel 7 vorgesehen, auf dem sich in der Darstellung wiederum erste und zweite Lagen A, B nicht miteinander verbundener Brandschutzplatten-Streifen 13', 14' befinden. Der Blechkanal-Blechdeckel 7 hat seitliche und z. B. endseitige Verbindungsflansche 8, 10, 9. In Fig. 1 ist der Blechkanaldeckel 7 mit den ersten und zweiten Lagen A, B dargestellt, der so auf die noch offene Seite gesetzt werden kann. Die ersten und zweiten Lagen A, B aus den Brandschutzplatten-Streifen 13', 14' können jedoch auch einzeln zunächst in den Blechkanal 1 und auf die dort bereits lose eingelegten Brandschutzplatten verbracht werden, ehe der Blechkanal-Deckel 7 aufgesetzt und z. B. unter Benutzen der Verbindungsflansche am Blechkanal 1 befestigt, z. B. verschraubt oder verklipst, wird. Allerdings könnte auch nur eine Lage A oder B entsprechender Stärke lose verbaut werden.

Fig. 2 verdeutlicht den fertig zusammengebauten Brandschutzkanal K, dessen Blechkanal 1 und Deckel 7 über die Verbindungsflansche z. B. 2, 9 und Verbindungsschrauben 17 oder Verklipsen aneinander festgelegt sind, sodass ein Brandschutzkanal-Abschnitt 26 einer bestimmten Länge und Größe entstanden ist, der einen Leitungs-Innenraum 16 umschließt, und die endseitigen Verbindungsflansche 3, 10, 6 und 5 z. B. zum Anschließen an einen weiteren Brandschutzkanal-Abschnitt 26 aufweist. Die Verbindungsflansche 2 an den Längsrändern der Seitenwände des Blechkanals 1 liegen z. B. in etwa auf der Höhe der oberen Längsränder der ersten Lage aus den Brandschutzplatten-Streifen 11. Der Blechkanal-Deckel 7 ist mit abgebogenen Längsrändern über den aufgelegten Brandschutzplatten-Streifen 13' gestülpt und mit seinen Verbindungsflanschen 9 an den Verbindungsflanschen 2 befestigt.

In der vergrößerten Darstellung des Endes des Brandschutzkanals K in Fig. 3 ist zu sehen, wie die einzelnen Brandschutzplatten-Streifen der ersten und zweiten Lagen A, B eingesetzt sind, die weder miteinander noch mit dem Blechkanal 1 noch mit dem Blechkanal-Deckel 7 verbunden sind, sodass in jeder Wand ein hier zweilagiges loses Brandschutzplatten-Streifen-Schutzsystem vorliegt.

Die Frontansicht der Fig. 4 zeigt, dass die Längsränder und Randbereiche der entsprechend vorkonfektionierten Brandschutzplatten-Streifen 11, 12, 13, 14 und 13', 14' so ineinandergreifen, dass in den Winkelbereichen der Wände des Brandschutzkanals K jeweils ein versetzter Stufenfalz 18 gebildet ist.

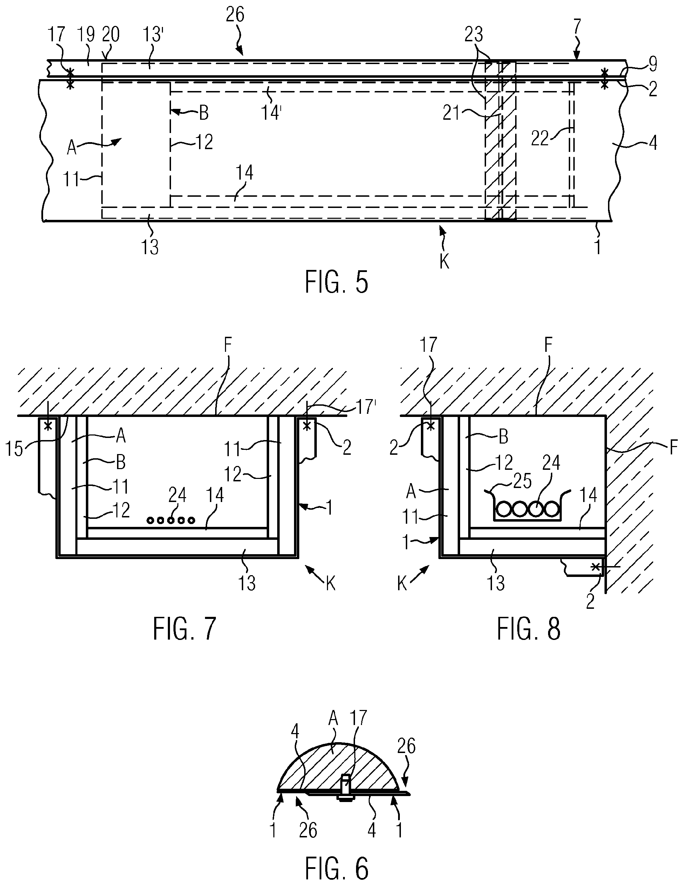

Fig. 5 zeigt in einer Seitenansicht eines Teils eines Brandschutzkanal-Abschnitts 26 (z. B. wie der in Fig. 2), wie der über den Brandschutzplatten-Streifen 13' gestülpte Blechkanal-Deckel 7 mit seinen Verbindungsflanschen 9 über Verbindungselemente 17 (Schrauben oder Verklipsen) mit den Verbindungsflanschen 2 des Blechkanals 1 verbunden ist, und dadurch alle ersten und zweiten Lagen A, B in der vierseitigen Auslegung positioniert und gehalten sind, ohne jegliche Verbindung zwischen den Brandschutzplatten-Streifen. Die erste Lage A aus den Brandschutzplatten-Streifen 13, 11 und 13' (siehe auch Fig. 4) liegt am Blechkanal 1 und dem Blechkanal-Deckel 7 an und kann durch diese beiden Bauteile fixiert sein. Ein Längsstoß 21 der ersten Lage A ist durch einen Streifen 23 eines feuerfesten oder intumeszierenden Brandschutzgewebes im Blechkanal1 gürtelartig umhüllt, der beispielsweise aus einem wasserfesten Brandschutzgewebe besteht und eine Breite von etwa 40 mm oder mehr haben kann. Die zweite Lage B wird innen an der ersten Lage A aus den Brandschutzplatten-Streifen 14, 12, 14' gebildet, wobei, beispielsweise, der Längsstoß 21 in der ersten Lage A versetzt angeordnet wird zu einem Längsstoß 22 in der zweiten Lage B. Der Blechkanal-Deckel 7 kann eine Blechplatte 20 mit abgebogenen Längsrändern 19 und den daran angeformten Verbindungsflanschen 9 sein.

Fig. 6 zeigt eine weitere Verbindungsart zwischen zwei Brandschutzkanal-Abschnitten 26. Hier überlappen sich die geraden Enden der Wände 4 der Blechkanäle 1, z. B. um etwa 40 mm, wie auch die geraden Enden der nicht gezeigten Deckel 7, und ist die jeweilige Verbindung z. B. durch von außen eingebrachte Befestigungsschrauben 17, Nieten oder Verklipsen gesichert. Es könnte alternativ auch ein die stumpf aneinander stoßenden Brandschutzkanal-Abschnitte 26 außen oder innen gürtelartig umfassender oder auskleidender Blechstreifen etwa in der Breite der Überlappung angebracht sein.

Fig. 7 verdeutlich eine dreiseitige Auslegung des Brandschutzkanals K, nicht wie in der beanspruchten Erfindung, wobei hier der Blechkanaldeckel 7 der vierseitigen Auslegung sowie die Brandschutzplatten-Streifen 13', 14' entfallen, und die offene Seite des U-förmigen Gebildes nach Montage des Brandschutzkanals K durch eine Bauwerksfläche F verschlossen ist. Die Längsränder 15 der Brandschutzplatten-Streifen 11, 12 stehen z. B. unter der Anzugskraft der Befestigungsschrauben 17' in den Verbindungsflanschen 2 stumpf an der Bauwerksfläche F an. Elektrische Leitungen 24 können direkt auf der zweiten Lage B, z. B. dem Brandschutzplatten-Streifen 14, verlegt sein.

Im Übrigen können die Brandschutzplatten-Streifen Stärken zwischen etwa 15 und 30 mm oder mehr haben, und in den ersten und zweiten Lagen A, B gleiche oder unterschiedliche Stärken, und gegebenenfalls zum Teil unterschiedliche Längen, z. B. um den Versatz der Längsstöße zu erzeugen.

Fig. 8 verdeutlich eine zweiseitige Auslegung des Brandschutzkanals K, nicht wie in der beanspruchten Erfindung, wobei hier der Blechkanal 1 entweder ein winkelförmiges Blechkantteil mit den Verbindungsflanschen 2 oder aus miteinander verbundenen, mit entsprechenden Verbindungsflanschen ausgebildeten Blechplatten gefügt sein kann. Die ersten und zweiten Lagen A, B der Brandschutzplatten-Streifen 11, 12 und 13, 14 stehen z. B. mit ihren Rändern an den Bauwerksflächen F an und werden z. B. durch die Befestigungsschrauben 17' fixiert. Die elektrischen Leitungen 24 sind beispielsweise auf einer Kabelpritsche 25 verlegt, die auf dem Brandschutzplatten-Streifen 14 aufliegen kann. Die Verbindungsflansche an den Enden des Blechkanals sind in den Fig. 6 und 7 der Einfachheit halber nicht dargestellt.

Bei großen Brandschutzkanälen können in jeder Lage A, B auch mehr als nur ein Brandschutzplatten-Streifen mit ihren Längsrändern stumpf aneinanderstoßend und lose verbaut werden.

## Patentansprüche

1. Verfahren zum Herstellen eines an Bauwerksflächen (F) montierbaren Brandschutzkanals (K) zum Funktionserhalt eingelegter Leitungen (24), vorzugsweise für dauerhaften Außeneinsatz, mit in Wänden des Brandschutzkanals (K) in etwa rechtwinklig zueinander angeordneten Brandschutzplatten (P) aus feuerfestem Material, wobei als Außenabdeckung des Brandschutzkanals (K) ein an wenigstens einer Seite offener Blechkanal (1) gefertigt oder bereitgestellt und später durch einen Blechkanaldeckel (7) verschlossen wird, und von der offenen Seite in den Blechkanal (1) längs aneinanderstoßende einzelne Brandschutzplatten (P) in einer ersten Lage (A) angrenzend an den Blechkanal (1) und nachfolgend in einer an der ersten Lage (A) anliegenden zweiten Lage (B) eingebracht werden, wobei die Brandschutzplatten (P) werden ohne gegenseitige Verbindung der Brandschutzplatten (P) miteinander und mit dem Blechkanal (1) lose eingebracht, so dass an der jeweiligen Wand des Brandschutzkanals (K) ein zweilagiges Brandschutzplatten-System ohne mechanische Verbindung zwischen den Brandschutzplatten (P) und dem Blechkanal (1) entsteht, **gekennzeichnet durch** folgende Schritte:
Längsstöße (22) in der zweiten Lage (B) werden gegenüber Längsstößen (21) in der ersten Lage (A) versetzt platziert,
und zwischen der ersten Lage (A) und dem Blechkanal (1) sowie dem Blechkanaldeckel (7) wird über einen Längsstoß (21) der ersten Lage (A) ein Streifen (23) eines Brandschutzgewebes eingelegt.

2. Verfahren nach Anspruch 1, **dadurch gekennzeichnet, dass** als Brandschutzplatten (P) auf die jeweilige Größe des Brandschutzkanals (K) vorkonfektionierte Brandschutzplatten-Streifen (11, 12, 13, 13', 14, 14') mit geraden und ebenen, zur Plattenebene senkrechten Rändern (15) verbaut werden.

3. Verfahren nach Anspruch 1, **dadurch gekennzeichnet, dass** in jedem Eckbereich der Wände des Brandschutzkanals (K) Ränder (15) und Randbereiche der Brandschutzplatten (P) in den ersten und zweiten Lagen (A, B) jeweils zur Bildung eines versetzten Stufenfalzes (18) angeordnet werden.

4. Verfahren nach Anspruch 1, **dadurch gekennzeichnet, dass** der Streifen (23), des vorzugsweise wasserfesten, Brandschutzgewebes in der vierseitigen Auslegung des Brandschutzkanals (K) als Gürtel z. B. mit einer Breite zwischen 30 und 60 mm, eingelegt wird.

5. Verfahren nach Anspruch 1, **dadurch gekennzeichnet, dass** in den ersten und zweiten Lagen (A, B) Brandschutzplatten (P) mit gleichen oder unterschiedlichen Stärken und/oder Längen verbaut werden, vorzugsweise mit Stärken zwischen etwa 15 mm und etwa 80 mm.

6. Verfahren nach Anspruch 1, **dadurch gekennzeichnet, dass** als Blechkanal (1) ein winkeliges oder U-förmiges Blechkantteil verwendet wird oder der Blechkanal (1) aus wie der Blechkanaldeckel (7) mit Verbindungsflanschen (2, 3, 5, 6, 9, 10) gefertigten einzelnen Blechplatten gefügt, vorzugsweise verschraubt oder verklipst, wird.

7. Verfahren nach Anspruch 1, **dadurch gekennzeichnet, dass** im Blechkanal (1) Zinkblech, pulverbeschichtetes Blech oder Edelstahlblech, vorzugsweise mit einer Stärke von annähernd 1,0 mm, verwendet wird.

8. Verfahren nach wenigstens einem der vorhergehenden Ansprüche, **dadurch gekennzeichnet, dass** in einem Brandschutzkanal (K) mit mehr als einem Brandschutzkanal-Abschnitt (26) die Brandschutzkanalabschnitte (26) entweder über endseitige, nach außen stehende Verbindungsflansche (3, 10, 6, 5) der Blechkanäle (1), und der Blechkanaldeckel (7), oder mit geraden Enden überlappend ineinandergesteckt und miteinander verbunden, vorzugsweise verschraubt oder verklipst, werden.

9. Verfahren nach Anspruch 1, **dadurch gekennzeichnet, dass** in einem Leitungs-Innenraum (16) des Brandschutzkanals (K) elektrische Leitungen (24) direkt auf der zweiten Lage (B) oder auf wenigstens einer Kabelpritsche (25) verlegt werden.

10. Verfahren nach wenigstens einem der vorhergehenden Ansprüche, **dadurch gekennzeichnet, dass** feuerfeste Brandschutzplatten (P), vorzugsweise auf Zementbasis, verbaut werden.

11. Brandschutzkanal (K) zum Funktionsschutz eingelegter Leitungen (24), vorzugsweise für dauerhaften Außeneinsatz, mit in den Wänden des vierseitigen und durch einen Blechkanaldeckel (7) verschlossenen Brandschutzkanals (K) in etwa rechtwinkelig zueinander angeordneten Brandschutzplatten (P) aus feuerfestem Material in einem äußeren, an einer offenen Seite mit dem Blechkanaldeckel (7) verschlossenen Blechkanal (1), wobei innen an der Blechkanalwand jeweils eine erste Lage (A) über Längsstöße aneinanderstoßender, auf die Kanalgröße vorkonfektionierter Brandschutzplatten-Streifen (11, 13, 13') und an der ersten Lage (A) anliegend eine zweite Lage (B) vorkonfektionierter, über Längsstöße (22) aneinanderstoßender Brandschutzplatten-Streifen (12, 14, 14') unter Freihalten eines Leitungs-Innenraums (15) positioniert sind, wobei die ersten und zweiten Lagen (A, B) jeweils ohne gegenseitige Verbindung zwischen den Brandschutzplatten-Streifen und der Blechkanalwand lose eingelegt sind, **dadurch gekennzeichnet,**
**dass** Längsstöße (22) in der zweiten Lage (B) gegenüber Längsstößen (21) in der ersten Lage (A) versetzt platziert sind,
und **dass** jeder Längsstoß (21) der ersten Lage (A) zwischen dem Blechkanal (1) und der ersten Lage (A) durch einen Streifen (23) aus Brandschutzgewebe abgedeckt ist.

12. Brandschutzkanal nach Anspruch 11, **dadurch gekennzeichnet, dass** das Brandschutzgewebe feuerfest oder intumeszierend, vorzugsweise wasserfest, ist.

13. Brandschutzkanal nach Anspruch 11, **dadurch gekennzeichnet, dass** Längsränder (15) und Randbereiche der lose eingelegten Brandschutzplatten-Streifen in jedem Winkelbereich der Wände des Brandschutzkanals (K) einen versetzten Stufenfalz (18) bilden.

14. Brandschutzkanal nach Anspruch 11, **dadurch gekennzeichnet, dass** der Brandschutzkanal (K) aus aneinander über nach außen abstehende Verbindungsflansche oder mit geraden Blechkanal-Enden überlappend ineinandergesteckten, verschraubten Brandschutzkanal-Abschnitten (26) besteht.

## Claims

1. Method for producing a fire-safety-channel (K) to be mounted at structure surfaces (F) for maintaining the function of laid-in electrical lines (24), preferably for permanent outdoor missions, comprising fire-safety-plates (P) of fire-proof material, arranged substantially orthogonally relative to another within walls of the fire-safety-channel (K), wherein as an outer cover of an at least at one side open produced or provided sheet-metal-channel (1) a sheet metal channel- cover (7)is provided for later closing the sheet-metal-channel (1) , single fire-safety-plates (P) being inserted from the open side into the sheet metal channel (1) abutting longitudinally in a first layer (A) adjacent to the sheet metal channel (1 ) and subsequently in a second layer (B) abutting at the first layer (A), wherein the fire-safety-plates (P) are inserted loosely without mutual connection of the fire-safety-plates (P) with another and with the sheet metal channel (1), such that at the respective wall of the fire-safety-channel (K) a dual-layer fire-safety-plate-system is provided , without mechanical connection between the fire-safety-plates (P) and the sheet metal channel (1), **characterized by** the following steps:
longitudinal butts (22) in the second layer (B) are placed offset with respect to longitudinal butts (21) in the first layer (A), and between the first layer (A) and the sheet metal channel (1) as well the sheet metal channel-cover (7) a strip (23) of a fire-safety-cloth is placed on each respective butt (21) of the first layer (A).

2. Method according to claim 1, **characterized in that** as fire-safety-plates (P) prefabricated fire-safety-plate-strips (11,12,13,13',14,14') are installed, the fire-safety-plate-strips being prefabricated in view of the respective dimension of the fire-safety-channel (K) and having straight and planar edges (15) which extend perpendicular to the plane of the fire-safety-plate (P).

3. Method according to claim 1, **characterized in that** edges (15) and edge regions of the fire-safety-plates (P) are arranged in the first and second layers (A,B) in each corner region of the walls of the fire-safety-channel (K) respectively to form an offset stepped seam (18).

4. Method according to claim 1, **characterized in that** the fire-proof cloth strip (23) , which preferably is waterproof, is laid in as a belt, e.g. having a width between 30 and 60 mm, in a four-sided embodiment of the fire-safety-channel (K).

5. Method according to claim 1, **characterized in that** in the first and second layers (A,B) fire-safety-plates (P) are installed having equal or different thicknesses and/ or lengths, preferably having thicknesses between about 15 mm and about 80 mm.

6. Method according to claim 1, **characterized in that** a canted angle-shaped or u-shaped sheet metal part is used as the sheet metal channel (1), or that the sheet metal channel (1) like the sheet metal channel-cover (7) is made from joined single sheet metal plates produced with connecting flanges (2,3,5,6,9,10), which preferably are connected by screws or clips.

7. Method according to claim 1, **characterized in that** for the sheet-metal-channel (1) zinc-sheet metal, powder-coated sheet metal or stainless-steel sheet metal is used, preferably having a thickness of about 1,0 mm.

8. Method according to at least one of the preceding claims, **characterized in that** in a fire-safety-channel (K) having more than one fire-safety-channel-section (26) the fire-safety-channel-sections (26) and fire-safety-channel cover-sections either are connected with each other via outwardly protruding connecting flanges (3,10,6,5) at the ends of the sheet metal channels (1) and of the sheet metal channel-cover sections , or are plugged with straight ends within each other in overlapping fashion and connected with another, preferably by screws or clips.

9. Method according to claim 1, **characterized in that** in an electric line-inner space (16) of the fire-safety-channel (K) electric lines (24) are installed either directly on the second layer (B) or on at least one cable rack (25).

10. Method according to at least one of the preceding claims, **characterized in that** cement-based fire-proof fire-safety-plates (P) are installed.

11. Fire-safety-channel (K) for protecting the function of laid-in electric lines (24), preferably for permanent outdoor missions, with fire-safety-plates (P) made from fire-proof material, being arranged substantially orthogonally with respect to another in an outer sheet-metal-channel (1) and within walls of the four-sided fire-safety-channel (K) closed by a sheet metal channel-cover (7), wherein inside and at the sheet metal channel-wall respectively a first layer (A) of fire-safety-plate-strips (11,13,13') is positioned, the fire-safety-plate-strips being prefabricated in view of the dimensions of the sheet metal channel (1) and when installed longitudinally abutting at each other at longitudinal butts (21), and wherein abutting at the first layer (A) a second layer (B) is positioned of also prefabricated fire-safety-plate-strips (12,14,14') longitudinally abutting at each other at longitudinal butts (22), such that a line-inner space (15) is kept free, the first and second layers (A,B) being loosely laid in respectively without mutual connection between the fire-safety-plate-strips and the sheet metal channel-wall, **characterized in that** longitudinal butts (22) in the second layer (B) are placed offset with respect to longitudinal butts (21) in the first layer (A), and that each longitudinal butt (21) of the first layer (A) is covered between the sheet- metal- channel (1) and the first layer (A) by a strip (23) made from fire-safety-cloth.

12. Fire-safety-channel according to claim 11, **characterized in that** the fire-safety-cloth either is fire-proof or intumescent and, preferably, is waterproof.

13. Fire-safety-channel according to claim 11, **characterized in that** longitudinal edges (15) and edge regions of the loosely inserted fire-safety-plate-strips form an offset stepped seam (18) in each corner- region of the walls of the fire-safety-channel (K).

14. Fire-safety-channel according to claim 11, **characterized in that** the fire-safety- channel (K) consists either of fire-safety-channel-sections (26) having outwardly protruding connecting flanges connected by screws, or consists of fire-safety-channel-sections (26) having straight sheet metal channel-ends being plugged within each other in overlapping fashion and connected by screws.

## Revendications

1. Procédé de fabrication d'un canal de protection contre l'incendie (K) pouvant être monté sur des surfaces de construction (F) et permettant un maintien fonctionnel de lignes (24) posées, de manière préférée pour une utilisation extérieure durable, comprenant des plaques de protection contre l'incendie (P) en matériau réfractaire agencées dans les parois du canal de protection contre l'incendie (K) à peu près à angle droit les unes par rapport aux autres, dans lequel un canal en tôle (1) ouvert sur au moins un côté est fabriqué ou fourni sous la forme d'un recouvrement extérieur du canal de protection contre l'incendie (K) et est ensuite fermé par un couvercle de canal en tôle (7), et des plaques de protection contre l'incendie (P) individuelles venant en butée les unes contre les autres le long du canal en tôle (1) sont mises en place depuis le côté ouvert au sein d'une première couche (A) de manière adjacente au canal en tôle (1), et ensuite au sein d'une deuxième couche (B) de manière adjacente à la première couche (A),
dans lequel :
les plaques de protection contre l'incendie (P) sont mises en place de manière lâche sans liaison mutuelle des plaques de protection contre l'incendie (P) entre elles et avec le canal en tôle (1), de sorte qu'un système de plaques de protection contre l'incendie à deux couches sans liaison mécanique entre les plaques de protection contre l'incendie (P) et le canal en tôle (1) est créé au niveau de la paroi respective du canal de protection contre l'incendie (K), **caractérisé par** les étapes ci-dessous :
des joints longitudinaux (22) situés dans la deuxième couche (B) sont placés de manière décalée par rapport aux joints longitudinaux (21) situés dans la première couche (A),
et une bande (23) d'un tissu de protection contre l'incendie est posée par-dessus un joint longitudinal (21) de la première couche (A) entre la première couche (A) et le canal en tôle (1) ainsi que le couvercle de canal en tôle (7), .

2. Procédé selon la revendication 1, **caractérisé en ce que** des bandes de plaques de protection contre l'incendie (11, 12, 13, 13', 14, 14') préconfectionnées à la taille respective du canal de protection contre l'incendie (K) et présentant des bords droits et plans (15) perpendiculaires au plan de plaque sont installées en tant que plaques de protection contre l'incendie (P).

3. Procédé selon la revendication 1, **caractérisé en ce que,** dans chaque région d'angle des parois du canal de protection contre l'incendie (K), des bords (15) et des régions de bord des plaques de protection contre l'incendie (P) sont agencés dans les première et deuxième couches (A, B), respectivement afin de former une feuillure décalée (18).

4. Procédé selon la revendication 1, **caractérisé en ce que** la bande (23) du tissu de protection contre l'incendie, de manière préférée résistant à l'eau, est déposée, dans la configuration à quatre côtés du canal de protection contre l'incendie (K), sous forme de ceinture, par exemple avec une largeur comprise entre 30 et 60 mm.

5. Procédé selon la revendication 1, **caractérisé en ce que** des plaques de protection contre l'incendie (P) d'épaisseurs et/ou de longueurs identiques ou différentes sont installées dans les première et deuxième couches (A, B), de manière préférée avec des épaisseurs comprises entre environ 15 mm et environ 80 mm.

6. Procédé selon la revendication 1, **caractérisé en ce qu'**une pièce de chant en tôle formant un angle ou en forme de U est utilisée comme canal en tôle (1) ou **en ce que** le canal en tôle (1) est assemblé, de manière préférée par vissage ou par clipsage, à partir de plaques de tôle individuelles fabriquées comme le couvercle de canal en tôle (7) avec des brides de liaison (2, 3, 5, 6, 9, 10).

7. Procédé selon la revendication 1, **caractérisé en ce qu'**une tôle de zinc, une tôle revêtue par poudre ou une tôle en acier inoxydable, de manière préférée d'une épaisseur d'environ 1,0 mm, est utilisée dans le canal en tôle (1).

8. Procédé selon au moins l'une quelconque des revendications précédentes, **caractérisé en ce que,** dans un canal de protection contre l'incendie (K) avec plus d'une section de canal de protection contre l'incendie (26), les sections de canal de protection contre l'incendie (26) sont enfichées les unes dans les autres et reliées les unes aux autres, de manière préférée par vissage ou par clipsage, soit par l'intermédiaire de brides de liaison (3, 10, 6, 5), situées à une extrémité et dressées vers l'extérieur, des canaux en tôle (1), et du couvercle de canal en tôle (7), soit avec des extrémités droites qui se chevauchent.

9. Procédé selon la revendication 1, **caractérisé en ce que,** dans un espace intérieur de ligne (16) du canal de protection contre l'incendie (K), des lignes électriques (24) sont posées directement sur la deuxième couche (B) ou sur au moins un chemin de câbles (25).

10. Procédé selon au moins l'une quelconque des revendications précédentes, **caractérisé en ce que** des plaques de protection contre l'incendie (P) ignifuges, de manière préférée à base de ciment, sont installées.

11. Canal de protection contre l'incendie (K) permettant un maintien fonctionnel de lignes (24) posées, de manière préférée pour une utilisation extérieure durable, comprenant, au sein d'un canal en tôle (1) extérieur fermé par le couvercle de canal en tôle (7) au niveau d'un côté ouvert, des plaques de protection contre l'incendie (P) en matériau réfractaire agencées à peu près perpendiculairement les unes aux autres dans les parois du canal de protection contre l'incendie (K) à quatre côtés fermé par un couvercle de canal en tôle (7), dans lequel respectivement une première couche (A) de bandes de plaques de protection contre l'incendie (11, 13, 13 ') préconfectionnées à la taille du canal et venant en butée les unes contre les autres par-dessus des joints longitudinaux est positionnée à l'intérieur de la paroi de canal en tôle, et une deuxième couche (B) de bandes de plaques de protection contre l'incendie (12, 14, 14') préconfectionnées venant en butée les unes contre les autres par-dessus des joints longitudinaux est positionnée de manière adjacente à la première couche (A), en laissant libre un espace intérieur de ligne (15), dans lequel les première et deuxième couches (A, B) sont respectivement posées sans liaison mutuelle entre les bandes de plaques de protection contre l'incendie et la paroi de canal en tôle, **caractérisé en ce que** des joints longitudinaux (22) de la deuxième couche (B) sont placés de manière décalée par rapport à des joints longitudinaux (21) de la première couche (A) et **en ce que** chaque joint longitudinal (21) de la première couche (A) est recouvert par une bande (23) de tissu de protection contre l'incendie entre le canal en tôle (1) et la première couche (A).

12. Canal de protection contre l'incendie selon la revendication 11, **caractérisé en ce que** le tissu de protection contre l'incendie est ignifuge ou intumescent, de manière préférée étanche à l'eau.

13. Canal de protection contre l'incendie selon la revendication 11, **caractérisé en ce que** des bords longitudinaux (15) et des régions de bord des bandes de plaques de protection contre l'incendie posées de manière lâche forment une feuillure (18) décalée dans chaque région d'angle des parois du canal de protection contre l'incendie (K).

14. Canal de protection contre l'incendie selon la revendication 11, **caractérisé en ce que** le canal de protection contre l'incendie (K) est constitué de sections de canal de protection contre l'incendie (26) vissées les unes aux autres, enfichées les unes dans les autres par l'intermédiaire de brides de liaison dressées vers l'extérieur ou avec des extrémités de canal en tôle droites se chevauchant.
